**Europäisches Patentamt**

**European Patent Office**

**Office européen des brevets**

(19)

(11) Veröffentlichungsnummer : **0 138 203
B1**

(12) **EUROPÄISCHE PATENTSCHRIFT**

(45) Veröffentlichungstag der Patentschrift :
21.12.88

(21) Anmeldenummer : 84112244.3

(22) Anmeldetag : 11.10.84

(51) Int. Cl.⁴ : **C 08 J   3/22**, C 08 K   13/02,
C 08 L 23/02 // (C08K13/02,
3:36, 5:20)

(54) Kombiniertes Antiblocking- und Gleitmittelkonzentrat.

(30) Priorität : 14.10.83 DE 3337356

(43) Veröffentlichungstag der Anmeldung :
24.04.85 Patentblatt 85/17

(45) Bekanntmachung des Hinweises auf die Patenterteilung : 21.12.88 Patentblatt 88/51

(84) Benannte Vertragsstaaten :
BE DE FR GB IT NL SE

(56) Entgegenhaltungen :
DE–B– 1 210 177
DE–B– 1 264 054

(73) Patentinhaber : Grace GmbH
Erlengang 31
D-2000 Norderstedt (DE)

(72) Erfinder : Lüers, Georg
Bergstrasse 23
D-6525 Westhofen (DE)
Erfinder : Sobottka, Richard
Berta-Karillonstrasse 12
D-6520 Worms 32 (DE)

(74) Vertreter : UEXKÜLL & STOLBERG Patentanwälte
Beselerstrasse 4
D-2000 Hamburg 52 (DE)

## Beschreibung

Die Erfindung betrifft ein kombiniertes Antiblocking- und Gleitmittelkonzentrat auf Basis von Polyolefin, das Diatomeenerde, Kieselsäure und/oder Kieselgel als Antiblockingmittel, ein oder mehrere Amide ungesättigter $C_{18}$-$C_{22}$-Fettsäuren und gegebenenfalls weitere übliche Zusätze enthält. Dieses kombinierte Antiblocking- und Gleitmittelkonzentrat eignet sich als Additiv bei der Verarbeitung von Polyolefinen wie der Herstellung von Polyolefinfolien.

Es ist bekannt, daß man bei der Herstellung von Polyolefinfolien Additive zusetzt, die die Antiblocking- und die Gleiteigenschaften der fertigen Folie positiv beeinflussen. In der Praxis erfolgt der Zusatz des Antiblocking- und des Gleitmittels in der Weise, daß ein Antiblockingmittelkonzentrat und ein Gleitmittelkonzentrat, also zwei separate Konzentrate dem Polyolefin vor dem Extrudieren zugesetzt werden. Als Antiblockingmittel dienen dabei zum Beispiel feinteilige Diatomeenerde, Kieselsäure, Kieselgel, Kreide und Talk. Als Gleitmittel werden hauptsächlich Amide ungesättigter $C_{18}$-$C_{22}$-Fettsäuren und insbesondere Olsäureamid und Erucasäureamid verwendet. Aus wirtschaftlichen Gründen ist es dabei erwünscht, daß die eingesetzten Konzentrate so hoch wie möglich mit dem Additiv, dem Antiblocking- bzw. dem Gleitmittel, gefüllt sind. Man rüstet deshalb das Antiblockingmittelkonzentrat mit der technisch maximal höchsten Konzentration an Antiblockingmittel aus, die je nach vorhandener apparativer Ausrüstung zwischen 25 und 50 Gew.% beträgt. Entsprechend geht man beim Gleitmittelkonzentrat vor, bei dem jedoch nur eine Konzentration von 3 Gew.% und unter optimalen Bedingungen von maximal 5 Gew.% erreichbar ist, da höhere Gleitmittelmengen beim Einarbeiten in Polyolefin einfach wegfließen. Dementsprechend sind 5 Gew.% Gleitmittel häufig gar nicht erreichbar. Weiterhin « Gleiten » die Gleitmittel beim Einarbeiten zu stark, so daß die für die Einarbeitung benötigten Scherkräfte verlorengehen. Auf dem Markt befindliche Gleitmittelkonzentrate enthalten dementsprechend meistens nur etwa 2 Gew.% Gleitmittel.

Der Nachteil der Verwendung von separaten Antiblockingmittelkonzentraten und Gleitmittelkonzentraten liegt auf der Hand, da zunächst zwei Konzentrate hergestellt werden müssen und dann dem zu verarbeitenden Polyolefin wiederum zwei Konzentrate zugesetzt werden müssen. Dementsprechend wäre es vorteilhaft, nur ein Konzentrat zu haben, das sowohl das Antiblockingmittel als auch das Gleitmittel enthält. Dieses Vorgehen wird beispielsweise in der DE-AS 1 210 177 beschrieben, wo bei der Herstellung von Polyethylenfilm dem Polyethylengrundharz eine Mischung zugesetzt wird, die unter anderem ein Gleitmittel und ein Antiblockingmittel eingearbeitet in ein teilweise abgebautes Polyethylen enthält. Wie man den Beispielen (siehe insbesondere Beispiel 1) entnehmen kann, beträgt die Konzentration des Antiblockingmittels im Konzentrat jedoch nur 10 Gew.% und die des Gleitmittels nur 1,5 Gew.%. Dies bedeutet, daß die wirtschaftlich anzustrebende maximale Antiblockingmittelkonzentration im Konzentrat bei weitem nicht erreicht wird, während die Konzentration des Gleitmittels im üblichen aus den oben beschriebenen reinen Gleitmittelkonzentraten bekannten Konzentrationsbereich liegt.

Bei der Herstellung von Polyolefinfolien sind nun aber etwa gleiche Mengen an Antiblockingmittel und Gleitmittel erforderlich. Dies bedeutet, daß man in der Praxis aufgrund der unterschiedlichen Gehalte verschieden große Mengen an Antiblockingmittelkonzentrat bzw. Gleitmittelkonzentrat einsetzen muß. Geht man andererseits wie in der DE-AS 1 210 177 beschrieben vor und verwendet nur ein Konzentrat, das sowohl Antiblockingmittel als auch Gleitmittel enthält, ergibt sich die Schwierigkeit, daß aufgrund des begrenzten Gehaltes an Gleitmittel die Konzentration des Antiblockingmittels im Konzentrat weit unter der maximal möglichen Konzentration liegt, was äußerst unwirtschaftlich ist, da viel zu große Konzentratmengen hergestellt und in das Polyolefin eingearbeitet werden müssen.

Aufgrund der dargestellten Situation besteht also insbesondere aus wirtschaftlichen Gründen ein Bedarf nach einem kombinierten Antiblocking- und Gleitmittelkonzentrat, das einen möglichst hohen Gehalt sowohl an Antiblockingmittel als auch an Gleitmittel aufweist, so daß die aus wirtschaftlichen Gründen anzustrebende, maximale Antiblockingmittelkonzentration möglichst weitgehend erreicht wird. Ein derartiges Konzentrat konnte jedoch bisher aufgrund der begrenzten Mengen an Gleitmittel, die in das Konzentrat eingearbeitet werden konnten, nicht hergestellt werden.

Der vorliegenden Erfindung liegt somit die Aufgabe zugrunde, ein kombiniertes Antiblocking- und Gleitmittelkonzentrat zu schaffen, bei dem einerseits die maximale Einarbeitungskonzentration des Antiblockingmittels ausgeschöpft ist und andererseits das Gleitmittel in einer solchen Konzentration vorliegt, daß der Gehalt des Konzentrats an Antiblocking- und Gleitmittel entsprechend den Anforderungen der Praxis jeweils etwa gleich hoch ist. Mit anderen Worten liegt der Erfindung also die Aufgabe zugrunde, ein kombiniertes Antiblocking- und Gleitmittelkonzentrat zu schaffen, das bei Anwesenheit etwa gleich großer Mengen Antiblockingmittel eine höhere Gleitmittelkonzentration als bisher bekannt besitzt.

Zur Lösung dieser Aufgabe wird ein kombiniertes Antiblocking- und Gleitmittelkonzentrat der in den Patentansprüchen gekennzeichneten Art vorgeschlagen. Gegenstand der Erfindung sind ferner ein Verfahren zur Herstellung des erfindungsgemäßen Konzentrats und dessen Verwendung bei der Herstellung von Polyolefinfolien.

Die Erfindung beruht auf der überraschenden Erkenntnis, daß bei der Herstellung eines Konzentrats auf Basis Polyolefin über 5 Gew.% hinausgehende Gleitmittelmengen eingearbeitet werden können, wenn das üblicherweise in Form von Schuppen oder grobkörnigem Pulver vorliegende Gleitmittel mikronisiert und zusammen mit bestimmten Antiblockingmitteln eingearbeitet wird. Dabei ist von ausschlaggebender Bedeutung, daß beide vorgenannten Merkmale erfüllt sind, da die Mikronisierung des Gleitmittels allein keine höheren Konzentrationen als bisher üblich für ein Gleitmittelkonzentrat ermöglicht, d. h. auch bei Verwendung von mikronisiertem Gleitmittel können nur etwa 3 Gew.% Gleitmittel in das Polyolefinkonzentrat eingearbeitet werden. Es wird angenommen, daß sich das durch die Mikronisierung mikrofein gewordene Gleitmittel aufgrund der hohen Adsorbtionskapazität des gleichzeitig vorhandenen Antiblockingmittels an die Oberfläche (einschließlich der Oberfläche der Poren) der Antiblockingmittelteilchen anlagert. Mit anderen Worten bedeutet dies, daß die Antiblockingmittelteilchen als Träger wirken und bei der Einarbeitung das « Wegfließen » der relativ hohen Gleitmittelmenge durch die Adsorptionskräfte des Antiblockingmittels verhindert wird. Eine weitere Wirkung der Antiblockingmittelteilchen kann in der Aufrechterhaltung der erforderlichen Schmelzviskosität beim Einarbeiten gesehen werden. Das Gleitmittel allein erniedrigt nämlich die Schmelzviskosität, so daß die erforderlichen Scherkräfte verlorengehen. Demgegenüber bewirken die Antiblockingmittelteilchen allein genau das Gegenteil, nämlich einen Anstieg der Schmelzviskosität, d. h. für eine optimale Dispergierung werden erhöhte Scherkräfte erforderlich. Bei der erfindungsgemäßen Einarbeitung beider Additive als Kombination werden somit die Einarbeitungseigenschaften der Einzeladditive neutralisiert, d. h. die Einarbeitung der Mischung aus Antiblockingmittel und Gleitmittel kann bei optimaler Schmelzviskosität erfolgen.

Die Herstellung des erfindungsgemäßen kombinierten Antiblocking- und Gleitmittelkonzentrats erfolgt in der Weise, daß zunächst eine homogene feinteilige Mischung aus Antiblockingmittel und Gleitmittel hergestellt wird. Zu diesem Zweck werden die grobkörnigen Komponenten der Mischung zusammengegeben und unter solchen Bedingungen gemischt, daß die grobkörnigen Teilchen zu feinen Teilchen zerkleinert werden. Hierfür eignen sich dem Fachmann bekannte Vorrichtungen wie Prallmühlen, Strahlmühlen sowie andere Mischer und Mühlen. In der Praxis wird das Antiblockingmittel vorzugsweise als handelsübliches Produkt eingesetzt, das bereits in der erforderlichen feinteiligen Form vorliegt. Demgegenüber liegen die als Gleitmittel verwendeten Fettsäureamide üblicherweise in Form von Schuppen oder grobkörnigem Pulver vor. Bei der beschriebenen Vorgehensweise erfolgt dann also nur eine Zerkleinerung des Gleitmittels. Um die Zerkleinerung zu erleichtern ist es bevorzugt, das Mischen unter gleichzeitiger Zugabe von flüssigem Stickstoff durchzuführen. Der Stickstoff dient dabei der Versprödung der Fettsäureamide. Andererseits kann man die Mischung aus Antiblockingmittel und Gleitmittel auch bei Temperaturen oberhalb des Schmelzpunktes des Gleitmittels (z. B. durch Strahlmahlung) herstellen. In diesem Fall wird das Gleitmittel schon bei der Herstellung der Mischung als partikellose Masse auf die Antiblockingmittelteilchen verteilt. Alternativ kann man natürlich auch in einer Vorstufe das Gleitmittel für sich allein zerkleinern und dann mit dem bereits in feinteiliger Form vorliegenden Antiblockingmittel in üblicher Weise jedoch unter weniger scharfen Bedingungen vermischen.

Wie sich aus den obigen Ausführungen ergibt, muß das Antiblockingmittel zur Erfüllung seiner Trägerfunktion eine ausreichend große Oberfläche besitzen, d. h. das Antiblockingmittel muß ein ausreichendes Porenvolumen besitzen, so daß aufgrund der inneren Struktur die erforderliche Oberfläche vorhanden ist. Ferner muß das Antiblockingmittel eine ausreichend geringe Teilchengröße besitzen, da diese für die Antiblockingwirkung verantwortlich ist. Geeigneterweise besitzt das Antiblockingmittel deshalb in der Mischung von Antiblockingmittel und Gleitmittel und auch in dem später hergestellten Konzentrat eine mittlere Teilchengröße von bis zu 10 μm. Bevorzugt sind allerdings mittlere Teilchengrößen für das Antiblockingmittel von 1 bis 7 μm und insbesondere 2 bis 5 μm. Das Gleitmittel soll in der Mischung aus Antiblockingmittel und Gleitmittel eine mittlere Teilchengröße von 1 bis 100 μm besitzen oder bei der oben erwähnten Alternative der Herstellung der Mischung bei einer Temperatur oberhalb des Schmelzpunktes des Gleitmittels als partikellose, homogen verteilte Masse vorliegen. Gute Ergebnisse wurden beispielsweise erzielt mit Ölsäureamid, das eine mittlere Teilchengröße von 38 μm besaß. Zur Bestimmung der Teilchengröße dient das bekannte Coulter-Counter-Verfahren.

Die so erhaltene feinteilige Mischung von Antiblockingmittel und Gleitmittel wird dann in an sich bekannter Weise zu einem Konzentrat weiterverarbeitet, indem sie in geschmolzenes Polyolefin eingebracht und darin möglichst homogen verteilt wird. Üblicherweise wird das Polyolefin vorgelegt und dann wird die Mischung aus Antiblocking- und Gleitmittel zugesetzt. Die für diesen Zweck geeigneten Vorrichtungen wie Innenmischer und Schneckenkneter sind dem Fachmann geläufig (vgl. z. B die DE-AS 1 210 177, die DE-OS 23 52 999 und die DE-OS 29 48 911). Das als Konzentratbasis verwendete Polyolefin (z. B. Polyethylen, Polypropylen usw.) ist vorzugsweise das gleiche Polyolefin, wie das Polyolefin, dem das Konzentrat später zugesetzt werden soll. Nach ausreichend langer Einarbeitung der Mischung aus Gleitmittel und Antiblockingmittel in das Polyolefin wird das kombinierte Antiblocking- und Gleitmittelkonzentrat in üblicher Weise gewonnen, d. h. es wird beispielsweise in herkömmlicher Weise zu Pulver, Granulat usw. verarbeitet.

Wenngleich die im erfindungsgemäßen Antiblocking- und Gleitmittelkonzentrat enthaltenen Antiblockingmittel als solche bekannt sind, ist deren Auswahl erfindungsgemäß von wesentlicher Bedeutung. Dementsprechend können als Antiblockingmittel nur solche Mittel eingesetzt werden, die die oben beschriebene Wirkung bei der gleichzeitigen Einarbeitung mit dem Gleitmittel in das Basispolyolefin zeigen. Hierzu gehören Diatomeenerde, gefällte Kieselsäure und Kieselgel. Geeignete, handelsübliche Produkte besitzen, wie bereits oben erwähnt, eine mittlere Teilchengröße von bis zu 10 μm. Abgesehen von Diatomeenerde beträgt die BET-Oberfläche dieser Produkte in der Regel 400 ± 200 m². Als Beispiele erwähnt seien hier die von der Anmelderin selbst unter der Bezeichnung SYLOID® vertriebenen Produkte mit den Typenbezeichnungen 72, 77, 85, 244 und 276 (siehe Prospekt der Firma Grace mit dem Titel « SYLOID », Eigenschaften, Anwendung, Lieferprogramm, März 1980, gedruckt in der Bundesrepublik Deutschland, Druckvermerk 1-2-00.4 Gi). Das die Auswahl des Antiblockingmittels von kritischer Bedeutung ist, zeigt die Tatsache, daß Kreide und Talk in der erfindungsgemäßen Antiblocking- und Gleitmittelkombination nicht geeignet sind. Wie noch in den Beispielen beschrieben werden wird, floß das Gleitmittel bei entsprechend hohen Konzentrationen wie beim erfindungsgemäßen Konzentrat bei der Einarbeitung in das Basispolyolefin einfach heraus. Selbst eine weit unter der erfindungsgemäß erzielbaren optimalen Konzentration liegende Konzentration von 10 % war nicht erzielbar.

Als Gleitmittel werden erfindungsgemäß die üblichen Amide ungesättigter Fettsäuren mit 18 bis 22 Kohlenstoffatomen eingesetzt. Bei den handelsüblichen Produkten handelt es sich überwiegend um Ölsäureamid und Erucasäureamid. Selbstverständlich können auch Mischungen dieser Amide eingesetzt werden. Bezüglich handelsüblicher Produkte und deren bekannter Verwendung als Antiblockingmittel sei, z. B. auf Hermann Römpp « Chemie Lexikon », 6. Auflage, 1966, Seite 434, Stichwort « Armids » hingewiesen. Wie dieser Literaturstelle zu entnehmen ist, handelt es sich bei diesen Fettsäureamiden um flockenförmige, also grobteilige Produkte.

Das erfindungsgemäße Antiblocking-Gleitmittelkonzentrat wird bei der Verarbeitung von Polyolefinen und insbesondere der Herstellung von Polyolefinfolien in bekannter Weise in das Polyolefin eingearbeitet. Die Wirksamkeit des erfindungsgemäßen Konzentrats ist mindestens genauso gut wie bei herkömmlichem Einsatz von zwei separaten Konzentraten und ist meistens in Abhängigkeit vom Polyolefin sogar deutlich besser. Die verbesserte Wirksamkeit liegt insbesondere auf dem Gebiet der Gleitwirkung, was darauf beruht, daß sich die bisher in Form von Schuppen oder grobkörnigem Pulver verwendeten Gleitmittel bei der Einarbeitung nicht homogen im Polymer verteilen. Die mit Gleitmittelkonzentraten ausgerüsteten Folien weisen örtlich höhere bzw. niedrigere Gehalte an Gleitmitteln auf, so daß eine optimale, gleichmäßige Gleitmittelwirkung erst nach gewisser Lagerzeit der Folien erzielt wird und zwar dann, wenn sich durch Gleitmittelwanderung an die Folienoberfläche ein homogener Zustand eingestellt hat. Bei Verwendung des erfindungsgemäßen Konzentrats wird das Gleitmittel jedoch von vornherein homogen verteilt, wozu die vielen Mikroantiblockingmittelteilchen beitragen. In den Folien ist folglich von Anfang an an jeder Stelle ein Gleitmittelteilchen vorhanden, d. h. die Wanderung des Gleitmittels an die Folienoberfläche erfolgt homogener und mit gleichmäßigerer Geschwindigkeit.

Neben den wirkungsmäßigen Verbesserungen durch das erfindungsgemäße Konzentrat, die durch die bei der gemeinsamen Verarbeitung von Antiblocking- und Gleitmittel verbesserte Dispergierung bedingt sind, wiegen die bereits oben erwähnten wirtschaftlichen Vorteile des erfindungsgemäßen Konzentrats besonders schwer. Durch die vorliegende Erfindung ist es nunmehr möglich, nur ein Konzentrat herstellen zu müssen, das darüber hinaus noch eine sehr viel höhere Gleitmittelkonzentration als bisher übliche separate Gleitmittelkonzentrate besitzt. Dementsprechend braucht nur sehr viel weniger Konzentrat hergestellt zu werden. Darüber hinaus braucht auch bei der Polyolefinverarbeitung nur noch ein Konzentrat zugesetzt werden, was ganz offensichtlich eine erhebliche Verfahrensvereinfachung darstellt. Hinzu kommt, daß Dosierungsprobleme bei der Polyolefinverarbeitung auf ein Minimum beschränkt werden, da das erfindungsgemäße Konzentrat das Antiblocking- und das Gleitmittel bereits in dem vom Polyolefinverarbeiter gewünschten Verhältnis enthält. Wie bereits eingangs erwähnt, liegt dieses Verhältnis bei der Herstellung von Polyolefinfolien im allgemeinen bei etwa 1 : 1. Je nach Anwendungszweck kann das erfindungsgemäße Konzentrat jedoch 5 bis 35 Gew.% Antiblockingmittel, 5 bis 30 Gew.% Gleitmittel und bei Abwesenheit anderer üblicher Zusätze 35 bis 90 Gew.% Polyolefin enthalten. Da aus wirtschaftlichen Gründen jeweils möglichst hohe Antiblockingmittel- und Gleitmittelkonzentrationen angestrebt werden, sind allerdings Konzentrate, die 15 bis 30 Gew.% Antiblockingmittel, 15 bis 30 Gew.% Gleitmittel und dementsprechend 40 bis 70 Gew.% Polyolefin (siehe oben) enthalten, bevorzugt. Besonders bevorzugt ist ein Konzentrat, das 25 Gew.% Antiblockingmittel, 25 Gew.% Gleitmittel und dementsprechend 50 Gew.% Polyolefin (siehe oben) enthält.

Bei der Verarbeitung von Polyolefinen wird das erfindungsgemäße Konzentrat in solchen Mengen eingesetzt, daß herkömmliche Mengen an Gleitmittel und Antiblockingmittel vorliegen. In vielen Fällen können jedoch aufgrund der oben beschriebenen verbesserten Wirkungsweise auch geringere Mengen zum Einsatz kommen. Bei der Herstellung von Polyolefinfolien wird das erfindungsgemäße Konzentrat üblicherweise in einer solchen Menge verwendet, daß die hergestellte Polyolefinfolie 0,001 bis 0,5 Gew.% Gleitmittel und 0,001 bis 0,5 Gew.% Antiblockingmittel und vorzugsweise jeweils 0,04 bis 0,2 Gew.% dieser beiden Mittel enthält. Häufig verwendete Mengen Gleitmittel und Antiblockingmittel liegen jeweils im Bereich von etwa 500 bis 2 000 ppm.

Selbstverständlich kann das erfindungsgemäße Antiblocking- und Gleitmittelkonzentrat weitere übliche Zusätze enthalten, wobei sich diese Zusätze natürlich nach dem vorgegebenen Einsatzzweck des Konzentrats richten.

Im folgenden soll die Erfindung anhand von Beispielen näher erläutert werden.

Beispiel 1

In einem Doppelkonusmischer wurde eine möglichst homogene Mischung aus einem mikronisierten amorphen Kieselgel (SYLOID® 85, siehe oben) und Ölsäureamid (Amidgehalt etwa 90 %; Jodzahl 80 bis 95 ; freie Fettsäuren max. 3,5 %, Schmelzpunkt etwa 68 °C) hergestellt. Das Mischungsverhältnis von Kieselgel zu Ölsäureamid betrug 1 : 1. Die so hergestellte Mischung wurde dann in einer Prallmühle (Umfangsgeschwindigkeit 90 m/sek) unter gleichzeitiger Zugabe von flüssigem Stickstoff zerkleinert. Es wurde eine homogene Pulvermischung erhalten, in der das Ölsäureamid in feiner Verteilung vorlag (Teilchengrößenverteilung des Ölsäureamids zwischen 10 und 100 µm, mittlere Teilchengröße nach dem Coulter Counter Verfahren 38 µm ; Teilchengrößenverteilung des Kieselgels zwischen 0,5 und 15 µm, mittlere Teilchengröße 3,5 µm).

Die so hergestellte Mischung aus Antiblockingmittel und Gleitmittel wurde in einer Menge von 30 Gew.% in vorgelegtes Hochdruckpolyethylen mit niedriger Dichte (LDPE) mittels eines Innenmischers eingearbeitet. Die Temperatur betrug hierbei 165 °C. Nach ausreichend langer Einarbeitung wurde das erhaltene Konzentrat in herkömmlicher Weise granuliert.

Ferner wurden für Vergleichszwecke in der gleichen Weise zwei weitere Konzentrate hergestellt, die aus 90 % Hochdruck-Polyethylen mit niedriger Dichte (LDPE) und 10 % des auch oben verwendeten Kieselgels bzw. aus 95 % Hochdruck-Polyethylen mit niedriger Dichte (LDPE) und 5 % des oben beschriebenen Ölsäureamids bestanden.

Die so hergestellten Konzentrate wurden bei der Herstellung von Blasfolien aus Hochdruck-Polyethylen mit niedriger Dichte (LDPE ; Lupolen® 2420 H) eingesetzt. Die Foliendicke betrug 40 µm.

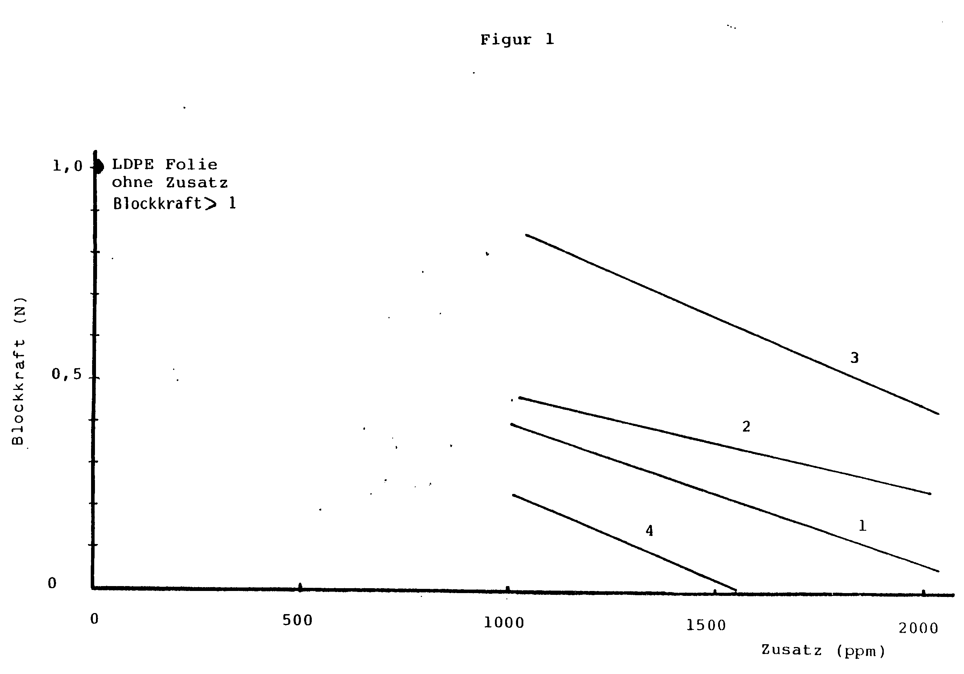

Die Blockkräfte an den unter Verwendung der oben beschriebenen Konzentrate hergestellten Folien wurden mittels Davenport Blocking Meßgerät gemessen nach Verblockung der Folien bei 60 °C, 3 h, 0,3 N/cm² Belastung. Als Kontrolle wurde auch eine Folie ohne jeglichen Zusatz untersucht. Folien ohne Zusatz zeigen Blockkräfte von 1 N oder mehr. Bei den im vorliegenden Fall untersuchten Folien betrug dieser Wert 1 N. Die erhaltenen Meßergebnisse sind in Figur 1 graphisch dargestellt, in der die Blockkraft gegen die Additivmenge aufgetragen ist. Die Kurve 1 zeigt das Folienverhalten bei Zusatz des Konzentrats, das nur Antiblockingmittel enthielt. Die Kurve 2 zeigt das Verhalten der Folie bei Zusatz von zwei separaten Konzentraten, von denen eins Antiblockingmittel und eins Gleitmittel enthielt. Die Kurve 3 gibt das Verhalten der Folie wieder, die nur das oben beschriebene Gleitmittelkonzentrat enthielt. Kurve 4 schließlich zeigt das Verhalten der Folie, die unter Verwendung des erfindungsgemäßen Konzentrats hergestellt worden ist. Hinsichtlich der Kurven 2 und 4 ist dabei darauf hinzuweisen, daß beispielsweise beim Kurvenpunkt 1 000 ppm Additiv sowohl das Gleitmittel als auch das Antiblockingmittel jeweils in einer Menge von 1 000 ppm vorliegen.

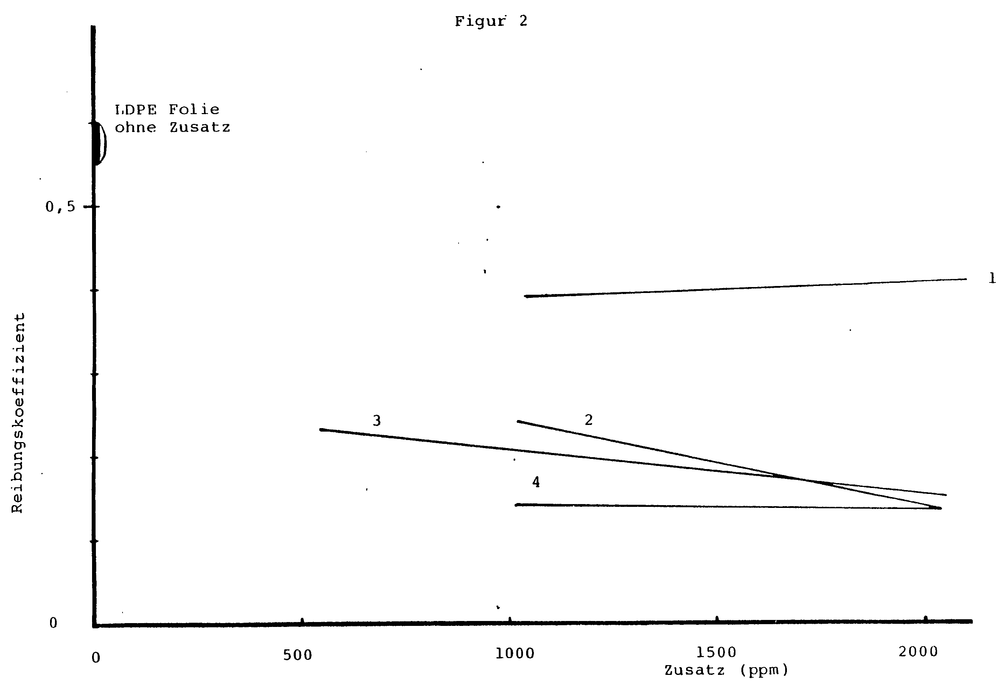

Weiterhin wurden die unter Verwendung der oben beschriebenen Konzentrate hergestellten Folien ebenfalls in Abhängigkeit von der zugesetzten Additivmenge auf ihre Gleiteigenschaften untersucht. Folien ohne Zusätze an Gleit- oder Antiblockingmitteln weisen normalerweise Reibungskoeffizienten zwischen 0,5 und 0,8 auf. Die im vorliegenden Fall untersuchte Folie ergab ohne Additivzusatz einen Reibungskoeffizienten von 0,58. Die in Abhängigkeit von der verwendeten Additivmenge erhaltenen Reibungskoeffizienten sind in Figur 2 graphisch dargestellt. Dabei betreffen die Kurven 1, 2, 3 und 4 wieder die oben angegebenen Folien.

Wie die oben beschriebenen Versuche verdeutlichen, ist das erfindungsgemäße Antiblocking- und Gleitmittelkonzentrat den separaten Konzentraten wirkungsmäßig mindestens gleichwertig und insbesondere im unteren Konzentrationsbereich sogar überlegen. Versuche mit entsprechenden Konzentraten, in denen jedoch das Ölsäureamid durch Erucasäuremid (Amidgehalt etwa 95 %; Jodzahl 72 bis 90 ; freie Fettsäuren max. 1 %; Schmelzpunkt etwa 80 °C) ersetzt worden war, ergaben praktisch die gleichen Ergebnisse.

Beispiel 2

Durch Mischen und Mahlen wurde mittels einer Alpine-Labormühle unter Kühlung mit flüssigem Stickstoff Kombinationen von Ölsäureamid mit Diatomeenerde (Superfloss®, mittlere Teilchengröße etwa 4 µm), Kreide (mittlere Teilchengröße 1 bis 3 µm), Talk (Teilchengröße < 10 µm etwa 98 % und < 1 µm etwa 12 %) und Kieselgel (SYLOBLOC® 45) hergestellt. Die Mischungen enthielten jeweils 50 bzw. 40 Gewichtsteile Ölsäureamid und 50 bzw. 60 Gewichtsteile der zweiten Komponente. Die erhaltenen Mischungen waren feine Pulver von gelblicher Farbe.

Die so erhaltenen Mischungen wurden wiederum in einem Innenmischer bei einer Temperatur von 165 °C in einer Menge von 25 Gew.% in Hochdruck-Polyethylen mit niedriger Dichte (LDPE) eingearbeitet. Dabei ergab sich, daß die Kombinationen Kreide/Ölsäureamid und Talk/Ölsäureamid sich nicht dispergieren bzw. einarbeiten ließen. Schon nach kurzer Verweilzeit im Innenmischer « floß » die flüssig gewordene Kombination förmlich aus dem Mischer heraus.

Auch bei Verringerung der Konzentration der Kombinationen auf 10 % war eine Einarbeitung nicht möglich. Die Kombinationen Diatomeenerde/Ölsäureamid und Kieselgel/Ölsäureamid ließen sich demgegenüber problemlos einarbeiten. Die Konzentration konnte hier ohne Schwierigkeiten auf 40 Gew.% und mehr gesteigert werden.

Das für die Blasfolienherstellung verwendete Hochdruck-Polyethylen mit niedriger Dichte (LDPE) wurde dann wie folgt ausgerüstet :

a) 500, 1 000, 2 000 ppm Ölsäureamid ;

b) 500, 1 000, 1 500, 2 000 ppm Kieselgel oder Diatomeenerde ;

c) 500, 1 000, 1 500, 2 000 ppm Kieselgel oder Diatomeenerde plus gleiche Menge Ölsäureamid, wobei zwei getrennte Konzentrate verwendet wurden ;

d) 1 000, 2 000, 3 000, 4 000 ppm der obigen Kombinationen im Verhältnis 1 : 1, also jewells mit 500 ppm Kieselgel oder Diatomeenerde und 500 ppm Ölsäureamid, 1 000 ppm Kieselgel oder Diatomeenerde und 1 000 ppm Ölsäureamid usw. ;

e) 1 000, 2 000, 3 000, 4 000 ppm der obigen Kombinationen im Verhältnis 3 : 2, also jeweils mit 600 ppm Kieselgel oder Diatomeenerde und 400 ppm Ölsäureamid, 1 200 ppm Kieselgel oder Diatomeenerde und 800 ppm Ölsäureamid usw. .

Es ergab sich, daß alle verwendeten Konzentrate in den Folien gut dispergiert waren. Die Untersuchung der erhaltenen Folien auf ihre Blocking- und Gleiteigenschaften in der in Beispiel 1 beschriebenen Weise ergab, daß die erfindungsgemäßen Konzentrate im Vergleich zu Konzentraten, die nur Antiblockingmittel oder nur Gleitmittel enthielten, sehr viel bessere Ergebnisse erbrachten. Im Vergleich zur Verwendung von zwei separaten Konzentraten, von denen eins Antiblockingmittel und eins Gleitmittel enthielt, bestätigten sich die in Beispiel 1 beschriebenen Ergebnisse, d. h. das erfindungsgemäße Konzentrat ergab insbesondere hinsichtlich der Gleiteigenschaften der Folie im unteren Konzentrationsbereich (500 bis 1 500 ppm) deutliche Vorteile, während im oberen Konzentrationsbereich (1 500 bis 2 000 ppm) wirkungsmäßig kaum noch Unterschiede festgestellt werden konnten.

### Beispiel 3

Wie in Beispiel 2 beschrieben wurden 3 weitere Kombinationen von Ölsäureamid mit 2 Molekularsiebpulvern und einer gefällten Kieselsäure hergestellt. Die Mischungen enthielten jeweils 50 Gewichtsteile Ölsäureamid und 50 Gewichtsteile der zweiten Komponente. Bei den verwendeten Molekularsiebpulvern handelte es sich um synthetisches Natriumaluminiumsilikat (Sipernat 44 der Firma Degussa und SYLOSIV A10 der Anmelderin). Sipernat 44 hat eine mittlere Teilchengröße von 3 bis 4 µm und einen Porendurchmesser von etwa 0.4 nm (4 Å). SYLOSIV A10 besitzt eine mittlere Teilchengröße von etwa 2 µm und einen Porendurchmesser von etwa 1 nm (10 Å). Als gefällte Kieselsäure wurde FK 310 der Firma Degussa mit einer mittleren Teilchengröße von 3 bis 4 µm, einem $SiO_2$-Gehalt von etwa 94 % und einer BET-Oberfläche von etwa 700 $m^2$/g verwendet.

Die Mischungen von Ölsäureamid mit Molekularsiebpulvern ließen sich nicht in das Polyolefin einarbeiten. Ähnlich wie in Beispiel 2 bei den Kombinationen Kreide/Ölsäureamid und Talk/Ölsäureamid « floß » eine weiße Masse aus dem Kneter heraus. Die dritte Mischung aus Ölsäureamid und gefällter Kieselsäure ließ sich problemlos in einer Konzentration von 30 Gew.% in das Polyolefin einarbeiten. Das so erhaltene Konzentrat ergab ähnliche Ergebnisse wie die erfindungsgemäßen, in den Beispielen 1 und 2 beschriebenen Konzentrate.

Aus den beschriebenen Versuchen ergibt sich, daß das Gleitmittel einen « Träger » benötigt, um sich in den angestrebten hohen Konzentrationen einarbeiten zu lassen. Dieser Träger muß Adsorptionseigenschaften aufweisen. Fettsäureamide zeigen alleine praktisch keine Antiblockingwirkung. Umgekehrt zeigen die verwendeten Antiblockingmittel allein keine ausreichende Schlupfwirkung. Alle erfindungsgemäßen Kombinationen waren besonders im unteren Konzentrationsbereich wirksamer als Fettsäureamide allein und auch wirksamer als zwei separate Konzentrate, von denen das eine Fettsäureamid und das andere Antiblockingmittel enthält. Die erfindungsgemäßen Kombinationen von Fettsäureamiden mit Diatomeenerde, gefällter Kieselsäure oder Kieselgel unterscheiden sich in ihren Eigenschaften untereinander nicht wesentlich. Ferner zeigen die Versuche, daß die Wirkung des erfindungsgemäßen Konzentrats kaum beeinflußt wird, wenn von dem bevorzugten Mischungsverhältnis von Antiblockingmittel und Gleitmittel von 1 : 1 geringfügig abgewichen wird (3 : 2). Bei Verarbeitung des erfindungsgemäßen Konzentrats in Hochdruck-Polyethylen mit niedriger Dichte (LDPE) ergibt sich also, daß die Vorteile des erfindungsgemäßen Konzentrats hauptsächlich auf wirtschaftlichem Gebiet (geringere Konzentratmenge, vereinfachte Herstellung und Verwendung) liegen und wirkungsmäßige Vorteile nur von geringerer Bedeutung sind. Wie weitere Versuche gezeigt haben, kommt den wirkungsmäßigen Vorteilen größere Bedeutung bei Verwendung des erfindungsgemäßen Konzentrats in Polypropylenfolien zu. Hier dauert nämlich die Gleitmittelwanderung an die Folienoberfläche normalerweise einige Tage. Die erfindungsgemäße Kombination dagegen verleiht den Folien unmittelbar nach der Extrusion gute Gleiteigenschaften.

### Patentansprüche

1. Kombiniertes Antiblocking- und Gleitmittelkonzentrat (ausgenommen Konzentrate in Form von physikalischen Pulvermischungen) auf Basis von Polyolefin, das Diatomeenerde, gefällte Kieselsäure und/oder Kieselgel als Antiblockingmittel, ein oder mehrere Amide ungesättigter $C_{18}$-

C<sub>22</sub>-Fettsäuren und gegebenenfalls weitere übliche Zusätze enthält. dadurch gekennzeichnet, daß es 5 bis 35 Gew.% Antiblockingmittel, mehr als 5 und bis zu 30 Gew.% Gleitmittel und bei Abwesenheit anderer üblicher Zusätze 35 bis 90 Gew.% Polyolefin enthält.

2. Konzentrat nach Anspruch 1, dadurch gekennzeichnet, daß es 15 bis 30 Gew.% Antiblockingmittel und 15 bis 30 Gew.% Gleitmittel enthält.

3. Konzentrat nach Anspruch 2, dadurch gekennzeichnet, daß es 25 Gew.% Antiblockingmittel und 25 Gew.% Gleitmittel enthält.

4. Konzentrat nach den Ansprüchen 1 bis 3, dadurch gekennzeichnet, daß das Antiblockingmittel in feinteiliger Form mit einer mittleren Teilchengröße von bis zu 10 μm, vorzugsweise 1 bis 7 μm und insbesondere 2 bis 5 μm vorliegt und das Gleitmittel im gesamten Konzentrat homogen verteilt ist.

5. Verfahren zur Herstellung eines Konzentrats gemäß den Ansprüchen 1 bis 4, dadurch gekennzeichnet, daß man

a) eine homogene Mischung aus Antiblockingmittel mit einer mittleren Teilchengröße von bis zu 10 μm und Gleitmittel mit einer mittleren Teilchengröße von 1 bis 100 μm herstellt und

b) die so erhaltene Mischung in geschmolzenes Polyolefin einarbeitet.

6. Verfahren nach Anspruch 5, dadurch gekennzeichnet, daß man in Stufe a) des Antiblockingmittel und/oder das Gleitmittel in grobteiliger Form einsetzt und das Mischen unter solchen Bedingungen durchführt, daß die groben Teilchen auf die angegebene Teilchengröße zerkleinert werden.

7. Verfahren nach Anspruch 6, dadurch gekennzeichnet, daß man die Zerkleinerung unter Zusatz von flüssigem Stickstoff durchführt.

8. Verfahren nach Anspruch 6, dadurch gekennzeichnet, daß man die Zerkleinerung bei einer Temperatur oberhalb des Schmelzpunktes des Gleitmittels durchführt.

9. Verwendung des Konzentrats gemäß einem der Ansprüche 1 bis 4 als kombiniertes Antiblocking- und Gleitmittel bei der Herstellung von Polyolefinfolien.

10. Verwendung nach Anspruch 9, dadurch gekennzeichnet, daß man das Konzentrat in einer solchen Menge verwendet, daß die hergestellte Polyolefinfolie 0,001 bis 0,5 Gew.% Gleitmittel und 0,001 bis 0,5 Gew.% Antiblockingmittel enthält.

## Claims

1. Combined antiblocking and slip agent concentrate (with the exception of concentrates in the form of physical powder mixtures) based on polyolefin which contains diatomaceous earth, precipitated silica and/or silica gel as antiblocking agent, one or more amides of unsaturated C<sub>18</sub>-C<sub>22</sub>-fatty acids and, optionally, further conventional additives, characterized in that it contains 5 to 35 % by weight of antiblocking agent, more than 5 and up to 30 % by weight of slip agent and, in the absence of other conventional additives, 35 to 90 % by weight of polyolefin.

2. Concentrate according to Claim 1, characterized in that it contains 15 to 30 % by weight of antiblocking agent and 15 to 30 % by weight of slip agent.

3. Concentrate according to Claim 2, characterized in that it contains 25 % by weight of antiblocking agent and 25 % by weight of slip agent.

4. Concentrate according to Claims 1 to 3, characterized in that the antiblocking agent is present in a finely divided form having a mean particle size of up to 10 μm, preferably 1 to 7 μm and in particular 2 to 5 μm, and that the slip agent is distributed homogeneously throughout the entire concentrate.

5. Process for the preparation of a concentrate according to Claims 1 to 4, characterized in that

a) a homogeneous mixture of antiblocking agent having a mean particle size of up to 10 μm and slip agent having a mean particle size of 1 to 100 μm is prepared and

b) the mixture thus obtained is worked into the molten polyolefin.

6. Process according to Claim 5, characterized in that in stage a) the antiblocking agent and/or the slip agent is employed in a coarsely divided form and the mixing is carried out under conditions such that the coarse particles become comminuted to the stated particle size.

7. Process according to Claim 6, characterized in that the comminution is carried out with addition of liquid nitrogen.

8. Process according to Claim 6, characterized in that the comminution is carried out at a temperature above the melting point of the slip agent.

9. Use of the concentrate according to one of Claims 1 to 4 as a combined antiblocking agent and slip agent in the production of polyolefin films.

10. Use according to Claim 9, characterized in that the concentrate is used in an amount such that the polyolefin film produced contains 0.001 to 0.5 % by weight of slip agent and 0.001 to 0.5 % by weight of antiblocking agent.

## Revendications

1. Concentré combiné d'agent anti-adhérence de contact et d'agent de glissement (excepté les concentrés sous forme de mélanges physiques de poudres) à base de polyoléfine, qui contient de la terre de diatomée, de l'acide silicique précipité et/ou du gel de silice en tant qu'agent anti-adhérence de contact, un ou plusieurs amides d'acides gras insaturés en C<sub>18</sub>-C<sub>22</sub> et éventuellement d'autres additifs habituels, caractérisé en ce qu'il contient 5 à 35 % en poids d'agent anti-adhérence de contact, plus de 5 et jusqu'à 30 % en poids d'agent de glissement et en l'absence d'autres additifs habituels 35 à 90 % en poids de polyoléfine.

2. Concentré selon la revendication 1, caractérisé en ce qu'il contient 15 à 30 % en poids d'agent anti-adhérence de contact et 15 à 30 % en poids d'agent de glissement.

3. Concentré selon la revendication 2, caractérisé en ce qu'il contient 25 % en poids d'agent anti-adhérence de contact et 25 % en poids d'agent de glissement.

4. Concentré selon les revendications 1 à 3, caractérisé en ce que l'agent anti-adhérence de contact est sous forme finement divisée avec une taille moyenne de particules de jusqu'à 10 μm, de préférence de 1 à 7 μm, et en particulier de 2 à 5 μm et en ce que l'agent de glissement est réparti de façon homogène dans l'ensemble du concentré.

5. Procédé de préparation d'un concentré selon les revendications 1 à 4, caractérisé en ce que

a) l'on prépare un mélange homogène d'agent anti-adhérence de contact avec une taille moyenne de particules de jusqu'à 10 μm et d'agent de glissement avec une taille moyenne de particules de 1 à 100 μm et

b) l'on incorpore le mélange ainsi obtenu dans une polyoléfine fondue.

6. Procédé selon la revendication 5, caractérisé en ce que dans l'étape a) l'on incorpore l'agent anti-adhérence de contact et/ou l'agent de glissement sous forme grossière et en ce que l'on opère le mélangeage dans des conditions telles que les particules grossières sont réduites jusqu'aux dimensions de particules indiquées.

7. Procédé selon la revendication 6, caractérisé en ce que l'on opère la réduction de dimension avec addition d'azote liquide.

8. Procédé selon la revendication 6, caractérisé en ce que l'on opère la réduction de dimension à une température supérieure au point de fusion de l'agent de glissement.

9. Utilisation du concentré selon l'une des revendications 1 à 4, en tant qu'agent combiné anti-adhérence de contact et de glissement lors de la fabrication de feuilles en polyoléfine.

10. Utilisation selon la revendication 9, caractérisée en ce que l'on utilise le concentré en une quantité telle que la feuille de polyoléfine fabriquée contient 0,001 à 0,5 % en poids d'agent de glissement et 0,001 à 0,5 % en poids d'agent anti-adhérence de contact.

Figur 1

Figur 2